(19)

Europäisches
Patentamt
European
Patent Office
Office européen
des brevets

(11) **EP 1 762 946 A1**

(12) **EUROPEAN PATENT APPLICATION**

(43) Date of publication:
**14.03.2007 Bulletin 2007/11**

(51) Int Cl.:
***G06F 17/30*** *(2006.01)*

(21) Application number: **05019651.8**

(22) Date of filing: **09.09.2005**

(84) Designated Contracting States:
**AT BE BG CH CY CZ DE DK EE ES FI FR GB GR HU IE IS IT LI LT LU LV MC NL PL PT RO SE SI SK TR**
Designated Extension States:
**AL BA HR MK YU**

(71) Applicant: **SAP AG**
**69190 Walldorf (DE)**

(72) Inventor: **Thielmann, Wolfgang**
**Belfast BT6 8RF (GB)**

(74) Representative: **Hössle Kudlek & Partner**
**Patentanwälte,**
**Postfach 10 23 38**
**70019 Stuttgart (DE)**

(54) **A method and a system for performing a multidimensional categorization of a document repository**

(57)    The present invention refers to a method for performing a multidimensional categorization of a document repository (1) used for storing objects in category hierarchies within a computer system, wherein a mapping of objects being stored in a source category hierarchy (2) to target objects at target locations of a target category hierarchy (3) is associated with a source qualifier (4) and a target qualifier (5), the source qualifier (4) describing the objects to be mapped, the target qualifier (5) describing the target category hierarchy and characteristics of the target objects. The mapping is performed according to a mapping expression by
- computing the objects of the source category hierarchy (2) which match with the source qualifier (4),

- deriving from such successfully computed objects further associated characteristics,
- specifying the target objects as virtual mapping objects at the target locations in the target category hierarchy (3) as specified by the target qualifier (5) and in accord with the characteristics derived from the successfully computed objects, and
- mapping the computed objects of the source category hierarchy (2) to the respective virtual mapping objects in the target category hierarchy (3).

Furthermore, the invention also refers to an appropriate mapping algorithm, an appropriate computer system, a computer program and a computer program product.

Figure 4

**Description**

**Field of the Invention**

The present invention refers to the field of document classification or categorization. More particularly, the present invention refers to a method and a system for performing a multidimensional categorization of a document repository. Moreover, the present invention deals with a mapping algorithm providing a mapping expression for performing a multidimensional categorization of a document repository. The present invention also refers to a computer program product, a computer product and a computer-readable medium.

**Related Prior Art**

For managing large document sets users typically structure their documents according to some categories in a hierarchy of folders. In order to achieve a proper hierarchy, in which each document has one designated location, the categories at each level of the hierarchy must not overlap.

However, in practice documents often belong to more than one category. Even worse, when several users work with the same document repository or one user accesses it under various contexts they may be interested in having different category sets that structure the set of documents under different views.

Manual construction and maintenance of such multidimensional categories is practically not feasible. Whenever adding a new document to the repository a user would have to check all existing categories whether they apply for the new document thus putting an extreme load on the user.

Currently, there are several approaches for categorizing documents. All those approaches fall in one of the areas which will be described in the following.

First, there is the possibility of manual taxonomies. Here, each taxonomy has to be manually defined and maintained.

Second, there exist the so-called query-based taxonomies. In this case the taxonomy is manually built as a hierarchy of categories. Each category is associated with one search query. Whenever a document matches the search query of one category and the queries of all superordinate categories it is associated with that category. Generally spoken, a taxonomy can be understood as a hierarchical structure of categories in which documents are classified according to content, organizational or other criteria. Documents that are stored in different physical repositories can be included in the same category. Users can navigate in a uniform structure throughout an organization even if information is stored in heterogeneous storage locations. It is possible that after an initial configuration has taken place, the system automatically carries out classification of new and changed documents.

Taxonomies can also be based on examples. In this case the taxonomy is also manually built as hierarchy of categories. Here, each category is associated with a number of example documents. New documents are associated to the category that contains the most similar documents to the given documents. Similarity is determined by some information retrieval measures such as term frequency.

An automatic clustering is also known from the prior art. An automatic clustering does not rely on a pre-built taxonomy. Instead, the hierarchy of clusters is computed in a completely automated manner. Typically, it is not possible to associate one cluster with a clear description but there are even attempts to derive taxonomies from such automatically clustered document collections. Data clustering is a common technique for statistical data analysis, which is used in many fields, including data mining and pattern recognition. Clustering is the classification of similar objects into one or adjacent groups or more precisely the partitioning of a data set into subsets, so-called clusters, so that the data in each subset ideally share some common trait. Data clustering can be hierarchical or partitional.

None of the current approaches provides an easy and practical handling for a multidimensional categorization of a document repository. There is no possibility for a user to jump to and fro between different category hierarchies that structure a set of documents under different views, thus, being able to analyze the respective objects or documents with respect to various contexts.

Therefore, it would be desirable to have a method and a system to perform a multidimensional categorization of document repositories with reasonable computational complexity and substantially without human intervention.

**Summary of the Invention**

The present invention proposes a method with the features of claim 1 and a computer system with the features of claim 15. Furthermore, a mapping algorithm with the features of claim 14, a computer program product with the features of claim 16, a computer program with the features of claim 17 and a computer-readable medium with the features of claim 18 are provided.

The present invention refers to a method for performing a multidimensional categorization of a document repository used for storing objects in category hierarchies within a computer system, wherein the method is based on a description of mappings between various categories which allows associating an object that already exists in one category also to some other categories. That means that the existing object can automatically be synchronized across all categories, i.e. be associated to its corresponding categories. Such a description describes, thus, respective relations between different categories.

According to the present invention a method for performing a multidimensional categorization of a document repository used for storing objects in category hierarchies within a computer system is provided. According to the method of claim 1 a mapping of objects being stored in a source category hierarchy to target objects at target locations of a target category hierarchy is associated with a source qualifier and a target qualifier. The source qualifier describes the objects to be mapped, the target qualifier describes the target category hierarchy and characteristics of the target objects. The mapping is performed according to a mapping expression by computing the objects of the source category hierarchy which match with the source qualifier, deriving from such successfully computed objects further associated characteristics, specifying the target objects as virtual mapping objects at the target locations in the target category hierarchy as specified by the target qualifier and in accord with the characteristics derived from the successfully computed objects, and mapping the computed objects of the source category hierarchy to the respective virtual mapping objects in the target category hierarchy.

A document repository can be understood as a memory allowing storing files in a hierarchy of folders. This should include also repositories providing virtual folders or category hierarchies that are technically decoupled from physical file hierarchies. Both, files and folders are called within the scope of the present invention "object". Objects can have so-called "attributes" that allow for specifying arbitrary metadata to objects in form of key value pairs for example. A sequence of folders leading from a repository root to an arbitrary object is called a "path".

The present invention is based on the idea to describe a mapping between various category hierarchies, specified here as source category hierarchy and target category hierarchy, which allows associating an object that already exists in one category hierarchy also to some other category hierarchies. Therefore, an object already being stored in a source category hierarchy can be automatically assigned to another category hierarchy by means of the proposed mapping expression. For one single object being stored in a source category hierarchy multiple virtual mapping objects at specific target locations in some other target category hierarchies can be specified as target objects the one single object can be mapped to. The target objects are specified on the basis of a target qualifier which describes the target category hierarchy and by further characteristics derivable from the object to be mapped which matches with a source qualifier.

According to a possible embodiment of the method according to the present invention, both the source qualifier and the target qualifier are each described as a path expression. The path expression includes various path segments, each path segment being described by its name and optionally by attributes characterizing an object being associated with the path segment. A path expression generally describes different categories within a category hierarchy by their respective hierarchical location.

It is possible that the name and the attributes describing the respective path segments are at least partly bound to variables usable to transport information about the associated object. That means that the source qualifier may also contain some variables that are associated with the names and/or attributes of the various source qualifier's path segments. Even parts of a path segment name or attribute can be associated with a variable. Then, whenever a source object matches with the source qualifier, the variables specified in the source qualifier are bound to the specific name and attribute values of the matching source object. The name and the attributes of that object can be assigned to some variables, i.e. these specific name and attribute values are assigned to the respective variables. The same applies for the target qualifier.

It is possible that the attributes are used for specifying metadata of the associated object in form of key value pairs. The key of a key value pair is an identifier identifying the attribute among all the attributes of the specific object. The value of a key value pair contains the actual information associated with that specific key. Both, the keys and the values, can be bound to variables.

Furthermore, the attributes can be used for describing queries on the content of the associated object.

According to the described method according to the present invention the proposed mapping expression associates two qualifiers that describe source and target category hierarchies. The proposed mapping expression can be described by the following formula:

$$\textit{qualifier-for-source-objects} \rightarrow \textit{qualifier-for-target-objects}$$

The first qualifier as the source qualifier describes those source objects that are to be mapped on another location in the document repository. The second qualifier as the target qualifier describes the respective target location and characteristics for each source object that is to be mapped.

According to another embodiment of the method according to the present invention the step of specifying virtual mapping objects as target objects at the target locations in the target category hierarchy includes specifying and creating of intermediate objects as part of the target category hierarchy if necessary. It is possible that for creating a virtual mapping object superordinate categories such as folders are compiled at the corresponding target location in which the virtual mapping object as target object is to class, accordingly.

It is possible to realise the target objects, i.e. the virtual mapping objects, by symbolic link technology.

A symbolic link is a special type of directory entry. It allows multiple references to files or folders without requiring multiple copies of these items. It offers the possibility to associate an alternative name with a file or folder. It is possible to store a symbolic link information, namely the virtual object, like a regular file, but merely containing a text string of the file or object name the symbolic link pointed to and having a special attribute set indicating that it is a symbolic link rather than just a regular physical file or object.

Moreover, it is possible that at least some of the objects being stored in the source category hierarchy are also virtual objects being realized by the symbolic link technology. This case can apply when the source objects themselves are generated for example by a previous mapping.

According to a further possible embodiment of the method according to the present invention a path segment is flexibly described by so-called regular expressions. That means that the name of the path segment as well as the attributes characterizing the object being associated with the path segment are described by respective regular expressions.

A regular expression is a string that describes or matches a set of strings according to certain syntax rules. Regular expressions are generally used by many utilities to search and manipulate bodies of text based on certain patterns. A regular expression is usually used to give a concise description without having to list all elements. There are multiple operations, as for example an alternation operation, a grouping operation and a quantification operation, which are used to construct regular expressions. By means of those operations, constructions can be combined to form arbitrarily complex expressions. Regular expressions include constants and operators that denote sets of strings and operations over these sets, respectively.

According to a further embodiment of the method according to the present invention the mapping of objects is performed backwardly by exchanging the source qualifier with the target qualifier. When a new document is created within a folder that itself was the target location of a mapping then the document can be mirrored back to the original location of that folder. To achieve this, the source qualifier and the target qualifier are simply exchanged within the proposed mapping expression and then the mapping is performed as described by the claimed method. However, there is one important difference. A source qualifier within a mapping expression may contain unbound elements in inner path segments. If this is the case, the mapping cannot be performed backwards as those path segments cannot be instantiated. An unbound element can be described as a notation for a place in an expression into which some definite substitution may take place. Unbound elements can appear whenever a regular expression contains elements which can be instantiated in different manners, as for example an element which describes an arbitrary sign, and which are not associated with a variable bound to the corresponding qualifier.

As already mentioned the document repository can be chosen as a repository providing virtual objects and/or category hierarchies which are technically decoupled from physical category hierarchies.

It is possible that the mapping expression is specified by a so-called meta-syntax. Such a syntax of the mapping expression can be specified by a so-called Backus-Naur form specification. The Backus-Naur form also known as Backus normal form is a meta-syntax used to express context-free grammars. That is a formal way to describe formal languages. Backus-Naur form is widely used as a notation for the grammars of computer programming languages, command sets and communication protocols.

In a further embodiment of the method according to the present invention it is also possible that the source category hierarchy and the target category hierarchy are overlapping with each other.

The present invention also refers to a mapping algorithm which provides a mapping expression for performing a multidimensional categorization of a document repository used for storing objects in category hierarchies within a computer system. The mapping expression is associated with a source qualifier which describes objects to be mapped from a source category hierarchy to target objects at target locations within a target category hierarchy and a target qualifier describing the target category hierarchy and characteristics of the target objects. The mapping according to the mapping algorithm comprises the steps of computing the objects of the source category hierarchy which match with the source qualifier, deriving from such successfully computed objects further associated characteristics, specifying the target objects as virtual mapping objects at the target locations in the target category hierarchy as specified by the target qualifier and in accord with the characteristics derived from the successfully computed objects, and mapping the computed objects of the source category hierarchy to the respective virtual mapping objects in the target category hierarchy.

The present invention also refers to a computer system for performing and providing a multidimensional categorization of a document repository used for storing objects in category hierarchies. The computer system comprises a memory configured to provide multiple different category hierarchies and to store objects in categories of those category hierarchies. The system further comprises a defining, composing and editing unit which is configured to define a source qualifier describing objects to be mapped from a source category hierarchy to target objects at target locations within a target category hierarchy and a target qualifier describing the target category hierarchy and characteristics of the target objects. The computer system also comprises a computing unit which is configured to compute the objects of the source category hierarchy which match with the source qualifier and to derive from such successfully computed objects further associated characteristics, a specifying unit configured to specify the target objects as virtual mapping objects at the target locations in the target category hierarchy as specified by the target qualifier and in accord with the characteristics derived from the successfully computed objects, and a mapping unit configured to execute a mapping of the computed objects of the source category hierarchy to the respective virtual mapping objects in the target category hierarchy.

Furthermore, the present invention provides a computer program product with a computer-readable medium and a computer program stored on the computer-readable medium with program coding means which are suitable for carrying out a method according to the present invention and/or a mapping algorithm according to the present invention when the computer program is run on a computer, particularly in a computer system according to the present invention.

A computer program with program coding means which is suitable for carrying out a method according to the present invention and/or a mapping algorithm according to the present invention when the computer program is run on a computer, particularly in a computer system according to the present invention is also provided.

The present invention also refers to a computer-readable medium with a computer program stored thereon, the computer program comprising program coding means which are suitable for carrying out a method according to the present invention and/or a mapping algorithm according to the present invention when the computer program is run on a computer, particularly in a computer system according to the present invention.

The method and the system according to the present invention differ from the state of the art in some essential aspects which render the method and the system of the present invention advantageous compared with current approaches for categorizing documents.

By means of the method according to the present invention, it is possible to create incrementally additional, particularly overlapping categories within a document repository. Such a specification of new additional categories can in addition partially make use of already existing categories.

Furthermore, the mapping used by the method according to the present invention and used for feeding a category hierarchy with documents can be, albeit limited, used in two directions, forward and backward, which leads to improved category maintenance. Furthermore, it is possible by means of the proposed mapping algorithm not only to associate documents to category hierarchies but implicitly also to create categories as needed.

Further features and embodiments of the invention will become apparent from the description and the accompanying drawings.

It will be understood that the features mentioned above and those described hereinafter can be used not only in the combination specified but also in other combinations or on their own, without departing from the scope of the present invention.

The invention is schematically illustrated in the drawings by way of an example embodiment and is explained in detail with reference to the drawings. It is understood that the description is in no way limiting on the scope of the present invention and is merely an illustration of a preferred embodiment of the invention.

It should be understood that while the invention is described in terms of a specific system, that the invention has applications in a variety of information systems and can be used for any scenario where information items are ordered in some kind of hierarchy and which would therefore benefit from the system or the method according to the present invention. It is intended that the system used in the specification and claims is reached to cover any information system unless context requires otherwise.

The present invention can be extended in various dimensions. The mapping expression used by the method according to the present invention can involve variables which can be also bound to parts of a so-called basic expression. Basic expressions could use more rich techniques for pattern matching than regular expressions which are used and described in the above and the following specification. Furthermore, object attributes might include queries on objects' content.

The principle described by the method according to the present invention can be used for any scenario where information items are ordered in some kind of hierarchy and multiple, particularly overlapping, hierarchies would be helpful.

**Brief description of the Drawings**

In the drawings,

Figure 1 shows a possible formal specification of a mapping expression as used by an embodiment of the method according to the present invention;

Figure 2 shows a possible embodiment of a mapping algorithm according to the present invention;

Figure 3 shows different examples of possible mapping expressions usable in a further embodiment of the method according to the present invention;

Figure 4 shows a schematic diagram of processing of an embodiment of the method according to the present invention in a document repository; and

Figure 5 shows a schematic structural design of an embodiment of the computer system according to the present invention.

## Detailed Description of the Drawings

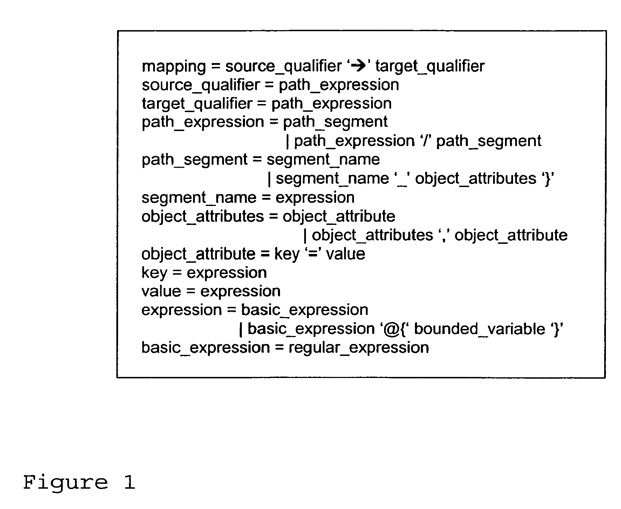

Figure 1 shows a possible formal specification of a mapping expression as it can be used by an embodiment of the method according to the present invention. Figure 1 shows a syntax of the mapping expression which is here specified by a so-called Backus-Naur form specification. Figure 1 shows a formal way by which a mapping expression according to the present invention can be described. First the mapping is defined by a source qualifier and a target qualifier which are associated with each other by an arrow indicating the mapping procedure. Next the source qualifier is described by a source-qualifier-specific path expression. The target qualifier is described by a target-qualifier-specific path expression, accordingly. Each path expression in turn includes either a path segment or a path expression including various path segments. A path segment includes either a segment name or a segment name and other attributes characterizing the associated object. The segment name in turn is described by an expression and the object attributes include either one single object attribute or a first object attribute followed by further object attributes. An object attribute in turn can include a key value pair, in which a key is an expression and a value is also an expression. An expression in turn can be a basic expression or a basic expression associated with one or several bounded variables. The basic expression in turn can be a regular expression.

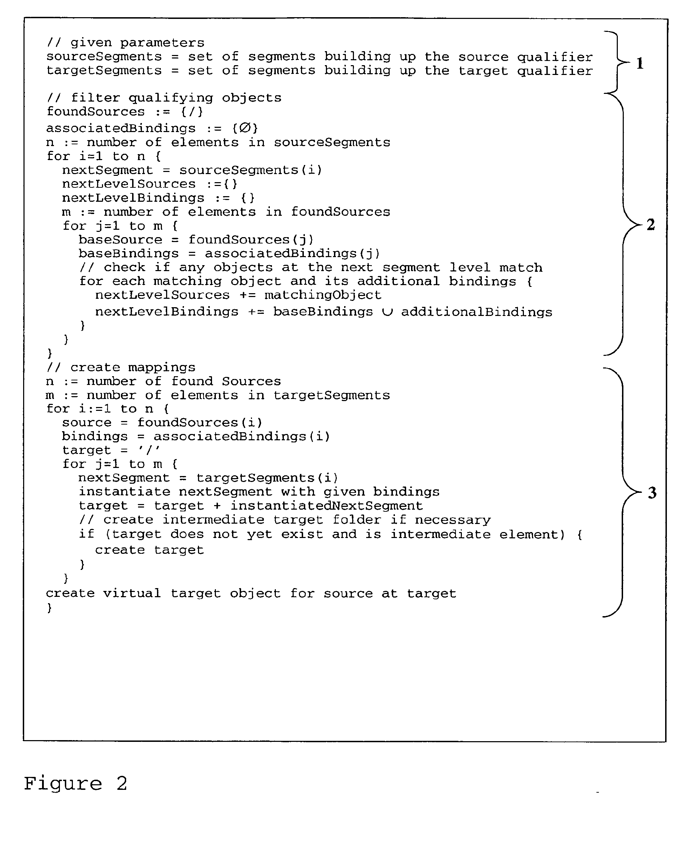

Figure 2 shows an embodiment of a mapping algorithm according to the present invention. The mapping algorithm illustrates how a mapping of objects being stored in a source category hierarchy can be mapped to target objects at target locations in a target category hierarchy. Figure 2 gives a code example to illustrate such a mapping.

In phase 1, given parameters are retained. Thus, phase 1 of the mapping algorithm comprises a description of "sourceSegments" as a set of segments building up a source qualifier and a description of "targetSegments" as a set of segments building up a target qualifier.

Phase 2 refers to filter qualifying objects. In phase 2 the mapping algorithm computes all source objects, i.e. objects of the source category hierarchy, that qualify for a mapping, i.e. match with the source qualifier as given in phase 1. The matching operation implicitly bound some variables to capture certain characteristics of the source objects.

Phase 3 refers to creation of actual mappings. Virtual mapping objects are created at respective target locations of the target category hierarchy as specified by the target qualifier. For instantiating the target qualifier, the mapping algorithm makes use of the variables bound within phase 2. In addition to the creation of virtual mapping objects, this phase also creates intermediate folders that are part of the target category hierarchy, if they do not exist so far.

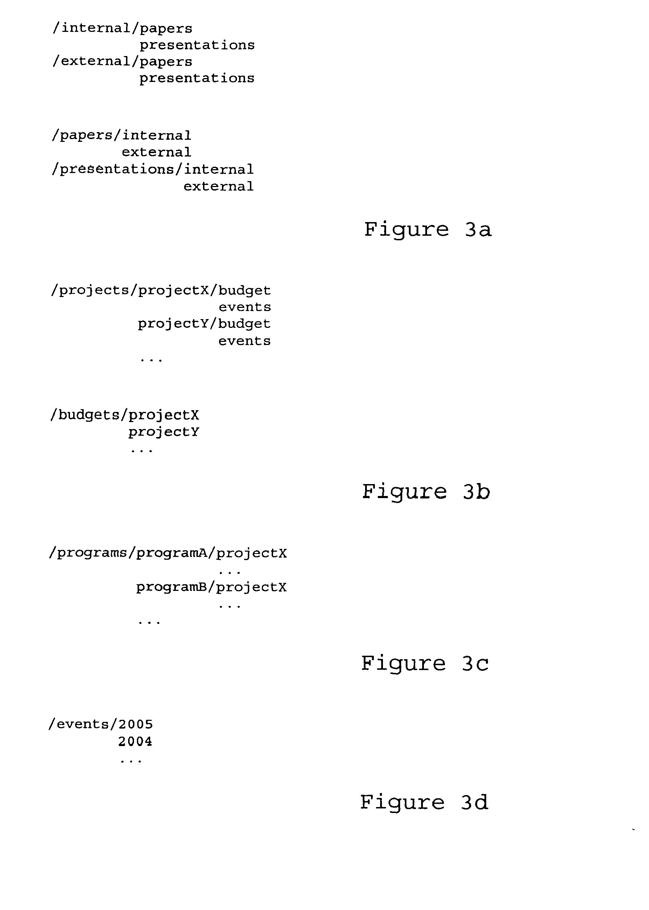

Figure 3 presents a couple of examples for mappings as they can be performed by an embodiment of the method according to the present invention. Each example states characteristics of a source and a target category hierarchy and shows a respective required mapping expression in order to perform a mapping according to an embodiment of the method according to the present invention.

Figure 3a shows a simple example for a mapping scenario. It is supposed that a document repository is used for storing presentations and papers. In a source category hierarchy the presentations and papers should be sorted by the criteria of being for internal or external purposes. Therefore, the source category hierarchy for the repository may look as follows:

```
/internal/papers
         presentations
/external/papers
         presentations
```

If a user wants to setup a second or target category hierarchy taking the document type as first sorting criteria, it should look as follows:

```
/papers/internal
        external
/presentations/internal
               external
```

The desired target category hierarchy can be automatically achieved by the following mapping expression combining several mapping steps:

- /internal/papers/* → /papers/internal/*
- /internal/presentations/* → /presentations/internal/*
- /external/papers/* → /papers/external/*
- /external/presentations/* → /presentations/external/*

This set of mapping steps will automatically map any document stored in one of the categories of the source category hierarchy in a matching category of the counterpart or target category hierarchy and vice versa as the mapping can be also applied backwards.

Figure 3b shows a mapping scenario with bounded resource names. It is supposed that a document repository is used for storing information on various projects. A primary or source category hierarchy for such a repository may look as follows:

```
/projects/projectX/budget
                   events
          projectY/budget
                   events
          ...
```

If somebody wants to setup another category hierarchy gathering just a budget information of the existing projects, it should look as follows:

```
/budgets/projectX
         projectY
         ...
```

A desired target category hierarchy can be automatically achieved by the following mapping expression:

- /projects/*@{*projName*}/budget/ → /budgets/{*projName*}/

This mapping can automatically map any project budget category between the respective project category of the source category hierarchy and the general budget category of the target category hierarchy and vice versa.

Figure 3c shows a mapping scenario with bounded attributes. It is supposed that a document repository is again used for storing information on various projects. It is also supposed that each project is associated to one program and that this information is stored in respective project attributes. If a user wants to setup another category hierarchy assembling projects according to the program they belong to, it should look as follows:

```
/programs/programA/projectX
                   ...
          programB/projectY
                   ...
          ...
```

The desired target category hierarchy can be automatically achieved by a following mapping expression:

- /projects/*_{program=*progName*} → /programs/{*progName*}/*

This mapping expression will automatically map any project category between the simple ordering in the "projects" category and various "program" categories and vice versa.

Figure 3d shows a mapping scenario with unbounded inner parameters. It is supposed again that the document repository is used for storing information on various projects. It is also supposed that each project has a dedicated sub folder category for project events and that each event has an associated attribute describing the year in which the event took place. If a user wants to setup another category hierarchy assembling all events across the projects but sorted by their year, it should look as follows:

```
/events/2005
        2004
        ...
```

A desired target category hierarchy can be automatically achieved by the following mapping expression:

- /projects/*/events/*_{*year=eventYear*}
  → /events/{eventYear}/*_{*year=eventYear*}

This mapping will automatically map any project-related event to the respective year category of the events hierarchy. In this case the mapping cannot be applied in backward direction. I.e. whenever another event description is created in the events category hierarchy, namely in the above described case in the target category hierarchy, e.g. in category "/events/2005", this cannot be mapped to one of the projects' event category. The reason for this is that the source qualifier in the above mapping expression uses an unbound parameter for an inner path segment of the path expression, namely the second path segment is just described by an asterix "*".

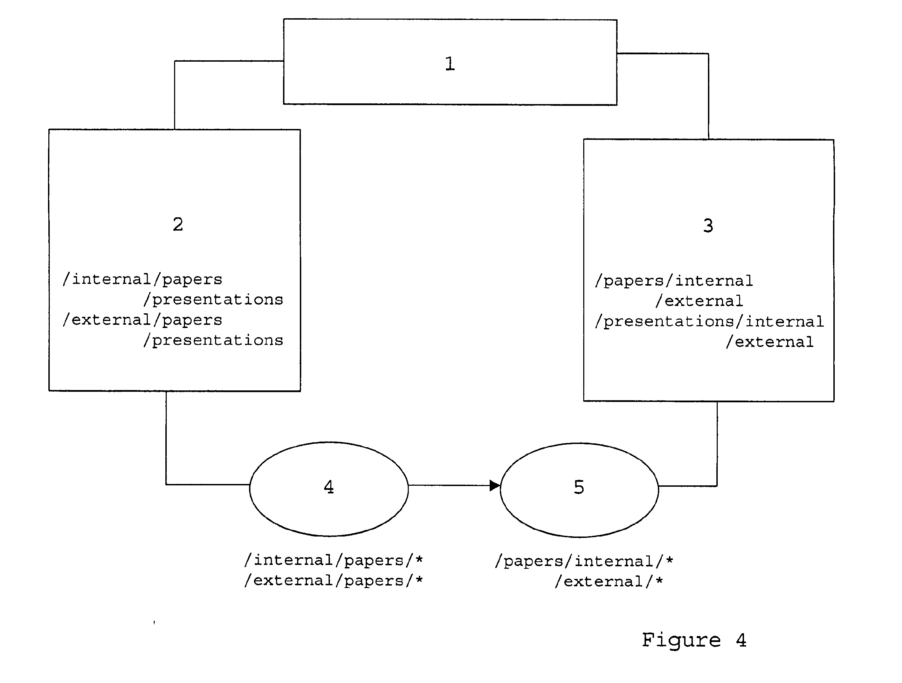

Figure 4 shows a schematic diagram of processing of an embodiment of the method according to the present invention in a document repository. A document repository 1 is used to store objects in category hierarchies within a computer system. It is possible that documents stored in a source category hierarchy 2 are suited to be associated to a second category hierarchy, called a target category hierarchy 3. In order to perform a mapping of objects between the source category hierarchy 2 and the target category hierarchy 3 which allows associating an object that already exists in the source category hierarchy 2 also to the target category hierarchy 3 the mapping associates two qualifiers that describe the source and target category hierarchy, respectively. A source qualifier 4 describes those source objects that are to be mapped on a target location of the target category hierarchy 3. A target qualifier 5 describes the respective target object at the target location.

It is possible for example that the document repository 1 is generally used for storing presentations and papers. Those presentations and papers are sorted within the source category hierarchy 2 by the criteria of being for internal or external purposes. Therefore categories within the source category hierarchy 2 can be organized into folders "intern" and "extern". Those categories are further divided into "internal/papers", "internal/presentations" and "external/papers" and "external/presentations", respectively.

It is possible now that the presentations and papers should be sorted according to a further criteria as for example by the criteria of being papers or presentations. The respective categories of the target category hierarchy 3 correspond to "papers" and "presentations". Those categories can be further divided into "papers/internal" and "papers/external" and "presentations/internal" and "presentations/external", respectively. In order to map all papers stored in the source category hierarchy 2 on target objects at corresponding target locations in the target category hierarchy 3 all papers must first be identified within the categories of the source category hierarchy 2 in which the papers are spread over different categories namely "internal/papers" and "external/papers". The source qualifier 4 exactly describes the source objects which are to be mapped on target objects at the target locations in the target category hierarchy 3. The source qualifier 4 is configured to select those source objects out of the different source categories which can be associated to the target category hierarchy 3. Within the above mentioned example the source qualifier 4 can be used to select all papers stored within the different categories of the source category hierarchy, namely in the "internal"-category and the "external"-category. When all objects of the source category hierarchy 2 which match with the source qualifier 4, namely in the above-mentioned example the "papers, are computed, further associated characteristics are derived therefrom. This can be summarized by the terms "/internal/papers/*" and "/external/papers/*". Then, the target objects as virtual mapping objects at the target locations in the target category hierarchy 3 are specified as specified by the target qualifier 5 and in accord with the characteristic derived from the successfully computed objects. This can be expressed by the corresponding terms "/papers/internal/*" and "/papers/external/*". Then the computed objects, namely the papers of the source category hierarchy 2 are mapped to the respective specified virtual mapping objects in the target category hierarchy 3, namely to target objects in respective target categories "/papers/internal" and "/papers/external".

A corresponding mapping can be performed with respect to the presentations which are stored in the source category hierarchy 2. The associated source qualifier 4 and the target qualifier 5 are modified, accordingly.

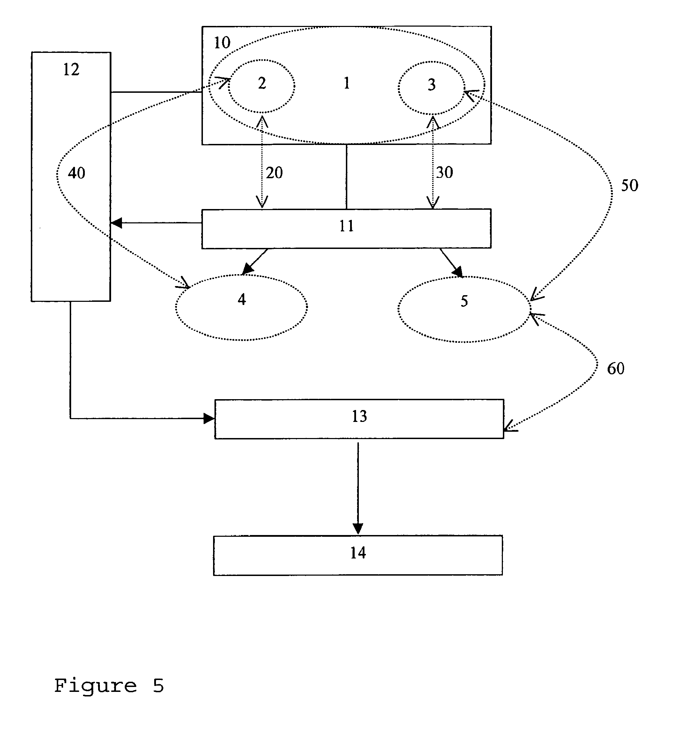

Figure 5 shows a schematic structural design of a possible embodiment of a computer system according to the present invention. The computer system comprises a memory 10 which is configured to provide multiple different category hierarchies and to store objects of a document repository 1 in categories of those category hierarchies. Here, only two category hierarchies, namely a source category hierarchy 2 and a target category hierarchy 3 are shown standing representatively for an arbitrary number of category hierarchies. A defining, composing and editing unit 11 is shown which is configured to define on the basis of the source category hierarchy 2 (indicated by arrow 20) a source qualifier 4 describing objects to be mapped from the source category hierarchy 2 to target objects at target locations within the target category hierarchy 3. Furthermore, the defining, composing and editing unit 11 is also able to define on the basis of the target category hierarchy 3 (indicated by arrow 30) a target qualifier 5 which describes the target category hierarchy 3 and characteristics of the target objects. The computer system further comprises a computing unit 12 which is used to compute the objects of the source category hierarchy 2 which match with the source qualifier 4 which is indicated by dotted arrow 40. The computing unit 12 derives from such successfully computed objects further associated characteristics. A specifying unit 13 is configured to specify the target objects as virtual mapping objects at the target locations in the target category hierarchy 3 as specified by the target qualifier 5 and in accord with the characteristics derived from the successfully computed objects. The concur of the target category hierarchy 3 and the target qualifier 5 used by the specifying unit 13 is indicated by respective dotted arrows 50 and 60. A mapping unit 14 is used to execute a mapping of the computed objects of the source category hierarchy 2 to the respective virtual mapping objects in the target category hierarchy 3.

**Claims**

1. A method for performing a multidimensional categorization of a document repository (1) used for storing objects in category hierarchies within a computer system, wherein a mapping of objects being stored in a source category hierarchy (2) to target objects at target locations of a target category hierarchy (3) is associated with a source qualifier (4) and a target qualifier (5), the source qualifier (4) describing the objects to be mapped, the target qualifier (5) describing the target category hierarchy (3) and characteristics of the target objects, the mapping being performed according to a mapping expression by

   - computing the objects of the source category hierarchy (2) which match with the source qualifier (4),
   - deriving from such successfully computed objects further associated characteristics,
   - specifying the target objects as virtual mapping objects at the target locations in the target category hierarchy (3) as specified by the target qualifier (5) and in accord with the characteristics derived from the successfully computed objects, and
   - mapping the computed objects of the source category hierarchy (2) to the respective virtual mapping objects in the target category hierarchy (3).

2. The method according to claim 1, wherein both the source qualifier (4) and the target qualifier (5) are described as a path expression, respectively, including various path segments, each path segment being described by its name and optionally by attributes characterizing an object being associated with the path segment.

3. The method according to claim 2, wherein the name and the attributes describing the respective path segments are at least partly bound to variables usable to transport information about the associated object.

4. The method according to claim 2 or 3, wherein the attributes are used for specifying metadata to the associated object in form of key value pairs.

5. The method according to any of claims 2 to 4, wherein the attributes are used for describing queries on the content of the associated object.

6. The method according to any one of the preceding claims, wherein the step of specifying virtual mapping objects at the target locations in the target category hierarchy (3) includes specifying intermediate objects as part of the target category hierarchy (3) if necessary.

7. The method according to any one of the preceding claims wherein at least some of the objects being stored in the source category hierarchy (2) are virtual objects being realized by symbolic link technology.

8. The method according to any one of claims 2 to 7 wherein the path segments are flexibly described by regular expressions.

9. The method according to claim 1, wherein the mapping of objects is performed backwardly by exchanging the source qualifier (2) with the target qualifier (3).

10. The method according to any one of the preceding claims, wherein the document repository (1) is chosen as a repository providing virtual objects and/or category hierarchies which are technically decoupled from physical category hierarchies.

11. The method according to any one of the preceding claims, wherein the mapping expression is specified by a meta-syntax, particularly by a Backus-Naur form specification.

12. The method according to any one of the preceding claims, wherein the objects are chosen as files and/or folders including virtual files and/or folders, respectively.

13. The method according to any one of the preceding claims, wherein the source category hierarchy (2) and the target category hierarchy (3) are overlapping with each other.

14. A mapping algorithm providing a mapping expression for performing a multidimensional categorization of a document repository (1) used for storing objects in category hierarchies within a computer system, the mapping expression being associated with a source qualifier (4) describing objects to be mapped from a source category hierarchy (2) to target objects at target locations within a target category hierarchy (3) and a target qualifier (5) describing the target category hierarchy (3) and characteristics of the target objects wherein a mapping to be performed according to the mapping expression comprises the steps of:

     - computing the objects of the source category hierarchy (2) which match with the source qualifier (4),
     - deriving from such successfully computed objects further associated characteristics,
     - specifying the target objects as virtual mapping objects at the target locations in the target category hierarchy (3) as specified by the target qualifier (5) and in accord with the characteristics derived from the successfully computed objects, and
     - mapping the computed objects of the source category hierarchy (2) to the respective virtual mapping objects in the target category hierarchy (3).

15. A computer system for performing and providing a multidimensional categorization of a document repository (1) used for storing objects in category hierarchies, the system comprising

     - a memory (10) configured to provide multiple different category hierarchies and to store objects in categories of those category hierarchies,
     - a defining, composing and editing unit (11) configured to define a source qualifier (4) describing objects to be mapped from a source category hierarchy (2) to target objects at target locations within a target category hierarchy (3) and a target qualifier (5) describing the target category hierarchy (3) and characteristics of the target objects,
     - a computing unit (12) configured to compute the objects of the source category hierarchy (2) which match with the source qualifier (4) and to derive from such successfully computed objects further associated characteristics,
     - a specifying unit (13) configured to specify the target objects as virtual mapping objects at the target locations in the target category hierarchy (3) as specified by the target qualifier (5) and in accord with the characteristics derived from the successfully computed objects, and
     - a mapping unit (14) configured to execute a mapping of the computed objects of the source category hierarchy (2) to the respective virtual mapping objects in the target category hierarchy (3).

16. A computer program product with a computer-readable medium and a computer program stored on the computer-readable medium with program coding means which are suitable for carrying out a method according to any one of claims 1 to 13 and/or a mapping algorithm according to claim 14 when the computer program is run on a computer, particularly in a computer system according to claim 15.

**17.** A computer program with program coding means which are suitable for carrying out a method according to any one of claims 1 to 13 and/or a mapping algorithm according to claim 14 when the computer program is run on a computer, particularly in a computer system according to claim 15.

**18.** A computer-readable medium with a computer program stored thereon, the computer program comprising program coding means which are suitable for carrying out a method according to any one of claims 1 to 13 and/or a mapping algorithm according to claim 14 when the computer program is run on a computer, particularly in a computer system according to claim 15.

```
mapping = source_qualifier '→' target_qualifier
source_qualifier = path_expression
target_qualifier = path_expression
path_expression = path_segment
                   | path_expression '/' path_segment
path_segment = segment_name
                   | segment_name '_' object_attributes '}'
segment_name = expression
object_attributes = object_attribute
                   | object_attributes ',' object_attribute
object_attribute = key '=' value
key = expression
value = expression
expression = basic_expression
             | basic_expression '@{' bounded_variable '}'
basic_expression = regular_expression
```

Figure 1

```
// given parameters
sourceSegments = set of segments building up the source qualifier
targetSegments = set of segments building up the target qualifier          } 1

// filter qualifying objects
foundSources := {/}
associatedBindings := {∅}
n := number of elements in sourceSegments
for i=1 to n {
  nextSegment = sourceSegments(i)
  nextLevelSources :={}
  nextLevelBindings := {}
  m := number of elements in foundSources
  for j=1 to m {
    baseSource = foundSources(j)
    baseBindings = associatedBindings(j)                                    } 2
    // check if any objects at the next segment level match
    for each matching object and its additional bindings {
      nextLevelSources += matchingObject
      nextLevelBindings += baseBindings ∪ additionalBindings
    }
  }
}
// create mappings
n := number of found Sources
m := number of elements in targetSegments
for i:=1 to n {
  source = foundSources(i)
  bindings = associatedBindings(i)
  target = '/'
  for j=1 to m {
    nextSegment = targetSegments(i)
    instantiate nextSegment with given bindings                             } 3
    target = target + instantiatedNextSegment
    // create intermediate target folder if necessary
    if (target does not yet exist and is intermediate element) {
      create target
    }
  }
create virtual target object for source at target
}
```

Figure 2

```
/internal/papers
          presentations
/external/papers
          presentations


/papers/internal
        external
/presentations/internal
             external
```

Figure 3a

```
/projects/projectX/budget
                  events
         projectY/budget
                  events
         ...


/budgets/projectX
         projectY
         ...
```

Figure 3b

```
/programs/programA/projectX
                  ...
         programB/projectX
                  ...
         ...
```

Figure 3c

```
/events/2005
        2004
        ...
```

Figure 3d

Figure 4

Figure 5

**European Patent Office**

**EUROPEAN SEARCH REPORT**

Application Number

EP 05 01 9651

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2003/018658 A1 (SUERMONDT HENRI JACQUES ET AL) 23 January 2003 (2003-01-23) * paragraphs [0012], [0013], [0052] - [0054], [0057]; figures 3,7 * ----- | 1-18 | G06F17/30 |
| A | US 6 098 072 A (SLUIMAN ET AL) 1 August 2000 (2000-08-01) * column 3, line 31 - line 45; figure 2 * * abstract * ----- | 7 | |
| A | US 2004/068508 A1 (SIHVO JYRRI ET AL) 8 April 2004 (2004-04-08) * paragraphs [0030], [0048] * ----- | 1,14-18 | |
| A | US 2005/071355 A1 (CAMERON KIM ET AL) 31 March 2005 (2005-03-31) * paragraphs [0018], [0044] * ----- | 1,14-18 | |

| TECHNICAL FIELDS SEARCHED (IPC) |
|---|
| G06F |

The present search report has been drawn up for all claims

| Place of search | Date of completion of the search | Examiner |
|---|---|---|
| Berlin | 24 January 2006 | Deane, E |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

.......................................................................................
& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 05 01 9651

This annex lists the patent family members relating to the patent documents cited in the above-mentioned European search report.
The members are as contained in the European Patent Office EDP file on
The European Patent Office is in no way liable for these particulars which are merely given for the purpose of information.

24-01-2006

| Patent document cited in search report | | Publication date | Patent family member(s) | | Publication date |
|---|---|---|---|---|---|
| US 2003018658 | A1 | 23-01-2003 | NONE | | |
| US 6098072 | A | 01-08-2000 | CA | 2201276 A1 | 27-09-1998 |
| US 2004068508 | A1 | 08-04-2004 | EP | 1350183 A1 | 08-10-2003 |
| | | | WO | 02054283 A1 | 11-07-2002 |
| | | | FI | 20002868 A | 29-06-2002 |
| US 2005071355 | A1 | 31-03-2005 | US | 2005071354 A1 | 31-03-2005 |
| | | | US | 2003177139 A1 | 18-09-2003 |

EPO FORM P0459

For more details about this annex : see Official Journal of the European Patent Office, No. 12/82